# FASCICULE DE BREVET EUROPEEN

(11) **EP 2 705 407 B1**
(45) Date de publication et mention de la délivrance du brevet: **30.03.2016**
(21) Numéro de dépôt: 12725105.6
(22) Date de dépôt: 04.05.2012
(51) Int. Cl.: G02F 1/13357

(54) **PROCEDE DE DECONSTRUCTION D'ECRANS PLATS A CRISTAUX LIQUIDES ET LAMPES DE RETRO-ECLAIRAGE**
VERFAHREN ZUR ZERLEGUNG VON FLÜSSIGKRISTALLFLACHBILDSCHIRMEN UND RÜCKBELEUCHTUNGSLAMPEN
METHOD FOR DISMANTLING LIQUID CRYSTAL FLAT SCREENS AND BACK-LIGHT LAMPS

(30) Priorité: 05.05.2011 FR 1153876
(43) Date de publication de la demande: 12.03.2014
(73) Titulaire: Veolia Propreté, 92000 Nanterre (FR)
(72) Inventeur: MAITROT, Aude, F-75009 Paris (FR); NAVARRO, Stéphanie, 78480 Verneuil sur Seine (FR); GALLARD, René-Bernard, F-49480 Saint Sylvain D'Anjou (FR)
(74) Mandataire: Novagraaf Technologies
(86) Numéro de dépôt international: PCT/FR2012/050999
(87) Numéro de publication internationale: WO 2012/150423

(56) Documents cités:
- EP-A2- 1 967 875
- CN-A- 101 368 697
- US-A1- 2005 088 586
- US-A1- 2007 019 275
- US-A1- 2007 153 496

## Description

La présente invention concerne la déconstruction, c'est-à-dire le démantèlement, d'écrans plats équipés de lampes de rétro-éclairage (CCFL).

De telles lampes de rétro-éclairage contiennent du mercure. Il faut donc faire particulièrement attention à ne pas les casser c'est-à-dire qu'il faut viser à conserver leur intégrité autant que possible, ou du moins à éviter tout déversement / contact de leur contenu polluant (mercure) sur les autres éléments de l'écran, ou toute libération du polluant dans la nature. Ce qui exclue de fait toute opération de broyage même partiel d'un écran tant que celui-ci contient encore des lampes.

En effet, pour détruire ou dépolluer ces écrans plats en fin de vie, il existe des procédés industriels de broyage, au moins partiel, de ces écrans au cours desquels la dalle et/ou les lampes de rétro-éclairage (ou néons) des écrans plats sont en général détruits ou partiellement endommagés. Dès lors, de tels procédés entraînent la libération, dans l'air, sur le sol mais également directement en contact avec l'écran ou les opérateurs, de gaz et de substances toxiques, tels que le mercure par exemple. Or le mercure qui se libère a tendance à polluer les autres éléments de l'écran, par exemple le plastique qui devient alors difficilement recyclable. Ces procédés sont donc responsables d'une certaine pollution mais également d'un risque d'intoxication pour l'opérateur.

En outre, les lampes de rétro-éclairage ont une constitution en verre fin et une forme fine et allongée. Elles sont donc particulièrement fragiles et peuvent se briser facilement lors du démontage d'un écran.

Les documents de l'art antérieur relatifs au démantèlement des écrans plats focalisent sur des procédés de retrait de la dalle a cristaux liquides (LCD) des écrans, dans lesquels les éléments polluants sont aspirés et piégés dans des filtres.

C'est le cas notamment avec la demande de brevet US 2007/153496 de CHANG SHAO-HAN qui décrit un procédé de déconstruction au moins partielle d'un module de rétro-éclairage de type direct comprenant une base, au moins deux unités de lampe de fixation et au moins un tube de lampe, chaque unité de fixation de lampe étant disposée sur chacune des extrémités opposées correspondantes de la base.

La demande de brevet EP 1967875 de FUNAI ELECTRIC décrit, quant à elle, un procédé de retrait d'une dalle avant le démontage de la source lumineuse de l'écran à cristaux liquide. Cet écran comprend un panneau périphérique à cristaux liquide, une plaque de guidage de lumière, une feuille réfléchissante, chacun des éléments étant fixé les uns sur les autres et entouré d'un boitier, d'une lampe, d'une feuille réfléchissante disposées entre une surface d'incidence et une feuille de guidage de lumière et disposées sur un côté du boitier.

Au contraire, la présente invention focalise sur le retrait des lampes de rétro-éclairage. Si un écran contient une dalle, celle-ci est donc préalablement retirée.

Plus précisément, l'invention concerne un procédé de déconstruction au moins partielle d'un écran plat, l'écran comprenant
des connecteurs solidaires de l'écran,
des lampes de rétro-éclairage connectées à au moins un connecteur respectif, et solidaires de l'écran par ce connecteur,
au moins deux bords latéraux,
au moins une plaquette, sensiblement perpendiculaire à l'un au moins des bords latéraux, la plaquette recouvrant des connecteurs et l'extrémité des lampes connectées à ceux-ci, et étant munie d'évidements pour le passage desdites lampes vers les connecteurs,
le procédé comprenant des étapes consistant à :
- lorsque l'écran comprend une dalle, retirer au préalable ladite dalle pour rendre les lampes et la plaquette apparentes, et
- désolidariser les lampes de l'écran sans les casser.

Grâce au procédé selon l'invention, la déconstruction des écrans plats est plus respectueuse de l'environnement et la santé des opérateurs.

Dans un mode de réalisation, on prévoit de retirer au moins partiellement la plaquette pour donner accès aux connecteurs.

Grâce à cette caractéristique, la désolidarisation des lampes de leur(s) connecteur(s) est grandement facilitée, tout en conservant au mieux l'intégrité des lampes.

Dans la présente invention, on prévoit en outre des étapes consistant à :
- déterminer au moins une ligne de découpe de la plaquette, et
- découper au moins partiellement la plaquette selon la ligne de découpe déterminée.

On prévoit en outre une étape de profilométrie laser consistant à obtenir la topographie tridimensionnelle au moins des lampes et de la plaquette, pour en déduire ladite ligne de découpe de la plaquette.

Grâce à cette caractéristique, le processus de découpe peut être automatisé, donc rapide et respectueux de la sécurité des opérateurs.

Dans un mode de réalisation, la ligne de découpe de la plaquette est comprise dans une zone comprise dans l'espace situé entre le sommet des lampes et le haut de la plaquette ou le carter de l'écran.

Grâce à cette caractéristique, la ligne de découpe ne risque pas de passer par le plan dans lequel s'inscrivent des lampes.

Dans un mode de réalisation, la ligne de découpe de la plaquette est comprise dans au moins une zone latérale de la plaquette.

Grâce à cette caractéristique, il est possible de découper la plaquette sur trois cotés ; donc de pouvoir la retirer facilement et rapidement.

De préférence, l'étape de découpe au moins partielle de la plaquette comprend une découpe dont la source d'énergie est optique ; thermique ; ou mécanique.

De préférence, l'étape de profilométrie laser comprend un balayage laser longitudinal et/ou latéral, éventuellement multiple.

Dans un mode de réalisation, l'étape consistant à déterminer au moins une ligne de découpe de la plaquette comprend une étape de marquage de la plaquette par des marqueurs, et une étape de détermination de la position des marqueurs pour établir ladite ligne de découpe.

Dans un mode de réalisation, on prévoit en outre une étape de pincement thermique du verre d'au moins une lampe.

Grâce à l'invention, le procédé de déconstruction peut être au moins semi-automatique, ce qui permet d'avoir des cadences de production élevées.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 illustre une vue partielle d'un écran dans lequel la dalle a été préalablement retirée pour rendre les lampes et la plaquette apparentes,
- la figure 2 illustre le principe de la profilométrie laser,
- la figure 3 illustre une coupe longitudinale d'un écran pendant une étape de profilométrie laser,
- les figures 4a à 4e et 5a à 5e illustrent la position d'un ensemble caméra-laser et l'image respective qui en résulte pendant une étape de profilométrie laser avec un balayage longitudinal,
- figures 4f à 4g et 5f à 5g illustrent la position d'un ensemble caméra-laser et l'image respective qui en résulte pendant une étape de profilométrie laser avec un balayage latéral,
- la figure 6 illustre une coupe transversale d'un écran, pour la détermination des extrémités haute et basse de la plaquette,
- la figure 7 illustre une plaquette vue de face dans une coupe transversale d'un écran, pour la détermination d'une éventuelle ligne de découpe dans l'une au moins des zones latérales,
- la figure 8 et la figure 9 illustrent respectivement le pincement thermique et son résultat,
- la figure 10 illustre un mode de réalisation du procédé selon l'invention, et
- la figure 11 illustre une coupe transversale de clips.

Par écran plat 10, on entend un écran de type informatique ou télévisuel comprenant à l'origine, c'est-à-dire lors de la construction et de l'utilisation de l'écran, une matrice de visualisation ou dalle LCD pour « Liquid Crystal Display » (non illustrée) sensiblement plate, et généralement en outre des filtres diffuseurs (non illustrés). Ces écrans comprennent également des lampes 11 de rétro-éclairage, ou néons, de forme tubulaire droite ou en U, qui renferment du mercure. Elles sont désignées ci-après lampes.

L'écran comprend également un fond 12, généralement en plastique et sensiblement plat, sous forme de feuille réfléchissante. Le fond 12 est solidaire de l'écran 10, et blanc pour réfléchir au mieux la lumière des lampes vers la dalle LCD. Les lampes 11 sont disposées selon un plan parallèle au fond 12 et disposées à l'origine entre le fond et la dalle LCD. Elles sont connectées chacune à au moins un connecteur 15 respectif. Les connecteurs sont disposés soit du même côté de l'écran (lampes en U) soit de part et d'autre de l'écran (lampes droites).

Les connecteurs 15 sont solidaires directement ou indirectement de l'écran 10, en général par soudure sur une partie métallique (carter 30 ou autre). Les lampes 11 connectées sont donc solidaires de l'écran 10 au moins par l'intermédiaire des connecteurs 15. En outre elles peuvent être solidaires de l'écran 10 par l'intermédiaire de clips 40 décrits ultérieurement.

Par ailleurs, l'écran, la dalle et le fond plat sont globalement rectangulaires.

Par convention, on entend par longueur le grand côté et par hauteur le petit côté du rectangle, que ce soit du fond, de la dalle ou de l'écran.

Généralement, les lampes sont alignées dans le sens de la longueur. Les connecteurs sont donc alignés dans le sens de la hauteur.

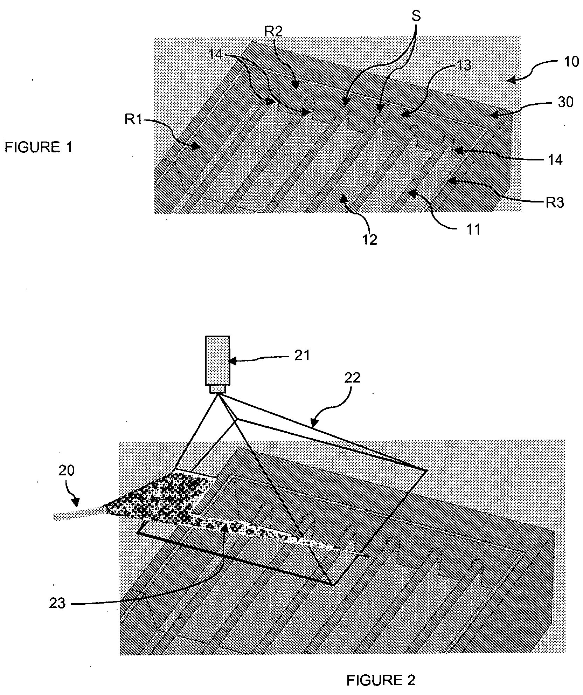

Sur chaque côté, le fond comprend un rebord respectif (voir R1, R2, R3 figure 1), incliné (éventuellement perpendiculaire) par rapport au plan du fond, et destiné à réfléchir la lumière vers la dalle, qui recouvre à l'origine le fond et les rebords.

Sur les quatre rebords, l'écran comprend au moins deux bords latéraux R1, R3. Les bords latéraux se font généralement face, et présentent généralement dans ce cas une direction d'élongation dans le sens de la longueur. Ils peuvent être solidaires du fond, par exemple par soudure de leur ligne de contact avec le fond plan. Les bords latéraux sont pleins, c'est-à-dire qu'ils sont plans et ne contiennent pas d'évidements, de sorte à réfléchir au mieux la lumière.

Sur les quatre rebords, l'écran comprend également au moins une plaquette 13, recouvrant les connecteurs 15 et l'extrémité des lampes connectées à ceux-ci, et étant munie d'évidements (ou encoches) 14 pour le passage desdites lampes vers les connecteurs 15. La plaquette 13 présente généralement une direction d'élongation dans le sens de la hauteur de l'écran. A l'inverse des bords latéraux, la plaquette 13 est généralement non solidaire du fond, c'est-à-dire que la ligne de contact avec le fond plan n'est pas ou n'est que peu solidaire du fond plat (ce qui facilite la construction des écrans). Par « peu solidaire » on entend que la force à exercer pour séparer la plaquette 13 du fond 12 le long de leur ligne de contact est inférieure, voire très inférieure, à la force à exercer pour séparer un bord latéral R1, R3 du fond 12 le long de leur ligne de contact respective.

Typiquement, les écrans équipés de lampes droites comprennent deux bords latéraux R1, R3 se faisant face, et deux plaquettes se faisant face (une seule plaquette 13 est illustrée). Les écrans équipés de lampes en U comprennent trois bords latéraux dont deux R1, R3 se font face, et une plaquette 13 faisant face au troisième bord latéral (non illustré).

La configuration d'une plaquette est telle qu'elle recouvre les connecteurs 15 et au moins partiellement les lampes 11 qui y sont fixées. Ces éléments ne sont donc pas accessibles, ni visibles, même une fois que la dalle LCD et les éventuels filtres diffuseurs ont été retirés.

Il est proposé ici un procédé de déconstruction au moins partielle d'un écran plat.

Dans ce contexte, on prévoit au préalable d'enlever la dalle 100, de préférence en conservant son intégrité, et les éventuels filtres diffuseurs de l'écran. Une partie au moins des lampes 11 et la plaquette 13 sont alors apparentes. Par souci de clarté, on ne décrit qu'une seule plaquette. Dans le cas de deux plaquettes, les mêmes opérations peuvent être effectuées sur l'autre plaquette.

Dans un mode de réalisation, on prévoit de conserver l'intégrité de la plaquette 13. On peut alors désolidariser 120 toutes les lampes 11 de l'écran 10 sans les casser par une étape 160 de pincement thermique décrite ultérieurement.

Dans un autre mode de réalisation, on prévoit une étape 110 consistant à retirer au moins partiellement la plaquette pour donner accès aux connecteurs, en amont d'une éventuelle étape de pincement thermique. Cette étape 110 de retrait au moins partiel peut comprendre une étape de découpe, de fonte et/ou d'arrachage au moins partiel de la plaquette 13.

Une fois les connecteurs 15 accessibles, il est alors possible de désolidariser les lampes de l'écran, par exemple par une étape consistant à désolidariser/déconnecter les lampes de leur(s) connecteur(s) respectif(s) par exemple par traction et/ou par pincement thermique 160. Il est également possible de désolidariser les lampes 11 de l'écran 10 par une étape consistant à désolidariser les connecteurs 15 de l'écran 10, par exemple en les dessoudant, la déconnection des lampes 11 de leur(s) connecteur(s) 15 respectif(s) pouvant être effectuée ultérieurement.

Dans un mode de réalisation, en amont de l'étape 110 consistant à retirer au moins partiellement la plaquette, on prévoit une étape 130 consistant à déterminer au moins une ligne de découpe de la plaquette, la plaquette étant ensuite découpée/fondue 140 au moins partiellement selon la ligne de découpe déterminée. De préférence, la ligne de découpe comprend au moins une ligne droite.

### Profilométrie laser

De préférence, en amont de la détermination 130 de la ligne de découpe, on prévoit une étape 150 de profilométrie laser consistant à obtenir la topographie (tridimensionnelle) d'une partie au moins des lampes 11 et de la plaquette 13.

D'autres techniques existent pour aboutir au même résultat :
- la télémètrie laser : utilise le même principe qu'en profilométrie mais au lieu de projeter une ligne laser, on projette un point seulement. L'avantage est le coût moindre et les calculs plus rapides, mais il faut un maillage très serré (beaucoup de points de mesure) pour obtenir la même quantité et précision d'information. De plus, un télémètre laser est plus sensible au matériau de l'écran (propriétés de réflexion variables) et à la température de l'air (pour le calcul des temps de trajet de la lumière).
- le palpage mécanique (palpeur sur robot) : Ce type d'outil est plus adapté pour localiser une surface plane, plutôt que des éléments fins comme les lampes. Il y a de plus un risque de casse des lampes et pose le même problème du maillage de points de mesure que le télémètre laser.
- la stéréovision : sur le principe de la vision binoculaire, deux caméras scrutent une même zone, et, connaissant la géométrie de leur montage, on peut calculer les coordonnées tridimensionnelles (3D) des points présents dans les deux images (géométrie épipolaire). Ce type de système fonctionne bien lorsque les points d'intérêt sont bien visibles par les deux caméras (pas d'occultation) et lorsque l'hétérogénéité du relief permet de bien distinguer et reconnaitre les points d'intérêt dans chaque image (contrairement aux surfaces planes où les disparités sont moins claires, ce qui est en partie le cas avec la plaquette, surface très homogène).

Pour ces raisons, on préférera la profilométrie laser qui comporte les avantages suivants:
- bonne précision,
- compatible avec un écran incliné,
- technologie sans contact, non intrusive,
- choix de la longueur d'onde du laser possible en fonction des matériaux de l'écran, et
- temps de cycle théorique relativement faible.

Pour la profilométrie laser, un laser 20 projette un faisceau plan dont il résulte un trait de lumière 23 sur une zone de la plaquette et des lampes. Le laser est incliné d'un angle α donné, par exemple de 30° à 45°, par rapport à l'axe optique XX d'une caméra 21 qui scrute une zone 22 où le trait laser est projeté en réflexion, de manière à imager les déformations du trait dues au relief, c'est-à-dire à la géométrie du fond de l'écran, des lampes et de la plaquette. De préférence, l'axe optique XX de la caméra 21 ou le plan laser est orthogonal au fond plat.

Le mouvement de la caméra 21 est solidaire du mouvement du laser 20, par exemple en étant portés tous deux par un bras robotisé (non illustré). Ce bras permet de produire un mouvement de translation (balayage) de l'ensemble caméra-laser notamment parallèlement et/ou perpendiculairement à la direction des lampes 11.

Si nécessaire, pour pouvoir balayer le côté opposé de l'écran, le robot fait pivoter l'ensemble caméra-laser de 180°, pour que le laser 20 se retrouve orienté de manière similaire dans l'autre sens.

La caméra 21 acquiert un ensemble d'images (échantillonnage) au cours du mouvement. On définit par dt l'intervalle de temps séparant deux images successives captées par la caméra.

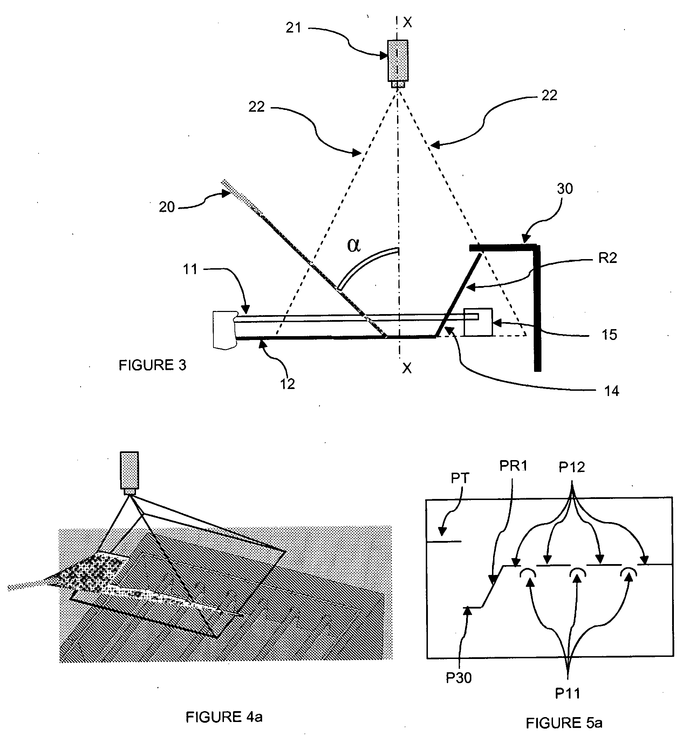

Sur chaque image, une ligne plus ou moins discontinue est observable (voir figure 5a à 5g). Cette ligne appelée profil représente la déformation du trait laser sur le relief des lampes 11 et de la plaquette 13.

### Balayage longitudinal

Dans un mode de réalisation, le balayage laser est longitudinal. Dans ce cas, le trait laser 23 (rectiligne) est sensiblement perpendiculaire à l'axe d'élongation des lampes, voir figure 4a à 4e. En l'espèce le trait laser 23 est sensiblement parallèle au petit côté de l'écran, et le mouvement de l'ensemble caméra-laser est en l'espèce parallèle à l'axe des lampes, et parallèle au grand côté de l'écran. Le sens du mouvement est en l'espèce centrifuge, c'est-à-dire de l'intérieur de l'écran vers le bord externe (carter 30) de l'écran, via les connecteurs 15, de manière à ce que le trait laser 23 passe d'abord sur les lampes 11 puis sur la plaquette 13 puis sur le bord externe (carter 30) de l'écran. Pour simplifier la présente description, seul ce mouvement est illustré sur les figures 4a à 4e et 5a à 5e. Dans un autre mode de réalisation non illustré, le mouvement est centripète, c'est-à-dire depuis l'extérieur de l'écran vers le bord externe (carter 30) de l'écran, puis les connecteurs, de manière à ce que le trait laser 23 passe d'abord sur le bord externe (carter 30) de l'écran, puis sur la plaquette 13, puis sur les lampes 11.

Les figures 4a à 4e illustrent de façon chronologique la position d'un ensemble caméra-laser pendant une étape de profilométrie laser avec un balayage longitudinal.

Les figures 5a à 5e illustrent l'image respective qui en résulte dans lesquelles le cadre illustre un écran de visualisation.

Sur la figure 4a, le trait laser est en amont de la plaquette 13. Il en résulte le profil correspondant figure 5a qui comprend :
- une ligne sensiblement droite discontinue P12 correspondant au fond 12,
- un ensemble d'arcs sensiblement circulaires P11 correspondant aux lampes 11,
- une ligne sensiblement droite continue PR1 correspondant au bord latéral R1,
- une ligne sensiblement droite continue P30 correspondant au carter 30, et
- une ligne sensiblement droite continue PT correspondant au support sur lequel était posé l'écran lors des mesures de profilométrie.

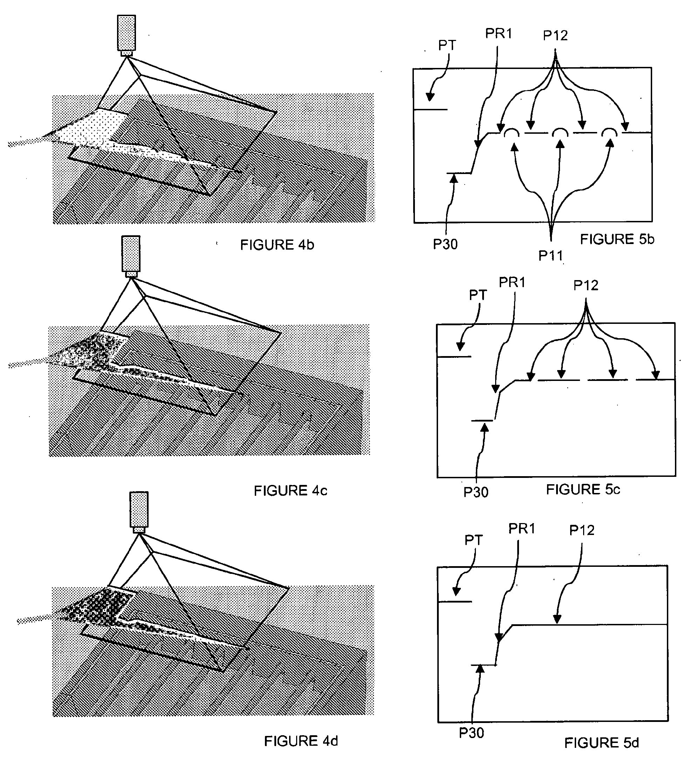

Sur la figure 4b, le trait laser est sur la plaquette 13 au dessous du sommet des lampes. Il en résulte le profil correspondant figure 5b dans lequel la distance relative sur l'écran de visualisation entre l'ensemble d'arcs sensiblement circulaires P11 correspondant aux lampes 11 et la ligne sensiblement droite discontinue P12 correspondant au fond 12 diminue par rapport à la figure 5a, du fait du mouvement de balayage centrifuge.

Sur la figure 4c, le trait laser est sur la plaquette 13 au dessus du sommet des lampes. Il en résulte le profil correspondant figure 5c dans lequel sur l'écran de visualisation, l'ensemble d'arcs sensiblement circulaires P11 correspondant aux lampes 11 ne sont plus visibles. La ligne sensiblement droite discontinue P12 correspond aux évidements 14 du fond 12.

Sur la figure 4d, le trait laser est sur la plaquette 13 au dessus du sommet des lampes et des évidements, et au-dessous du carter. Il en résulte le profil correspondant figure 5d dans lequel sur l'écran de visualisation, la ligne sensiblement droite P12 est alors continue.

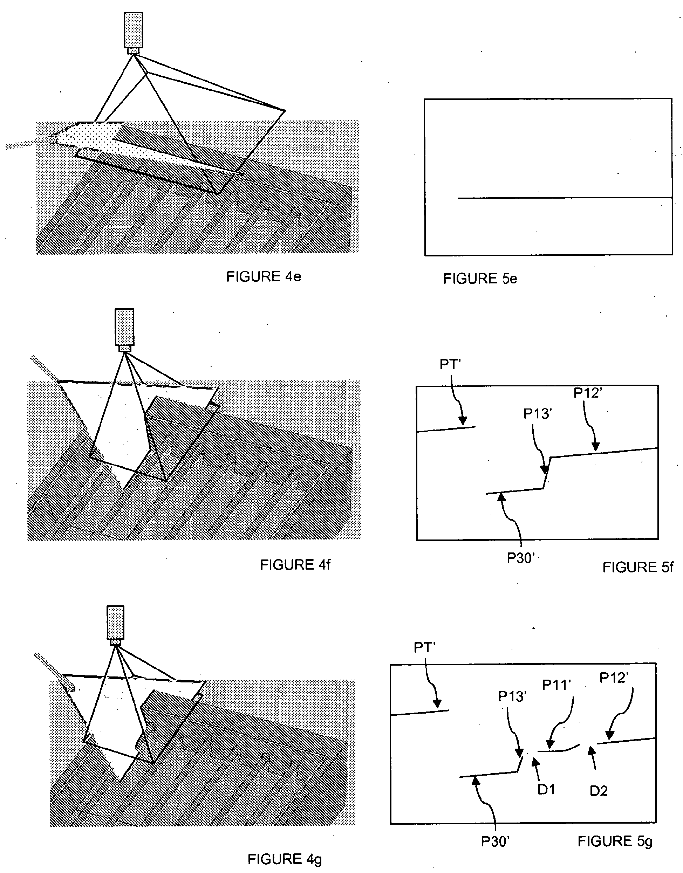

Sur la figure 4e, le trait laser est sur le carter. Il en résulte le profil correspondant figure 5e dans lequel sur l'écran de visualisation, on n'observe qu'une ligne sensiblement droite et continue correspondant au balayage du carter.

Les images du profil obtenu permettent, par des algorithmes de traitement d'image connus, de détecter :
- les points correspondant au sommet S des lampes (points des lampes les plus hauts par rapport au fond plat),
- le(s) segment(s) de droite correspondant au fond plat,
- le(s) segment(s) de droite correspondant au sommet de la plaquette (par exemple par une grande majorité de ligne continue et rectiligne),
- le(s) segment(s) de droite correspondant au carter 30 (par exemple par un profil complètement rectiligne)
et d'en déduire, par exemple dans le repère du robot supportant le bras robotisé :
- les coordonnées 3D (trois dimensions) des points correspondant au sommet S des lampes 11,
- l'équation 3D du fond plat 12,
- l'équation 3D du plan de la plaquette 13,
- l'équation 3D des droites correspondant aux limites du plan de la plaquette au niveau du carter 30 (limite haute), au niveau du fond (limite basse) et/ou au niveau de la droite HL des points correspondant au sommet des lampes.

De ces informations, on déduit par régression, dans le plan de la plaquette, l'équation de la droite reliant les points correspondant au sommet S des lampes, ainsi que les limites basse, haute, et latérales de la plaquette. Généralement, le sommet S des lampes coïncide sensiblement avec le sommet des évidements 14.

Connaissant les différentes équations et coordonnées 3D, il est alors possible de déterminer les limites dans lesquelles doit se situer la ligne de découpe de la plaquette pour ne pas casser les lampes ni découper le carter.

De préférence, la ligne de découpe LD de la plaquette est comprise au moins dans une zone ZH située entre le haut HL des lampes et le haut HP (réel ou détecté par la profilométrie) de la plaquette.

A cet effet, la ligne de découpe peut comprendre, dans le plan de la plaquette, une ligne LD de préférence droite et parallèle au fond plat, située à une distance X1 prédéterminée au-dessus de la droite HL des points correspondant au sommet des lampes, et/ou à une distance X2 prédéterminée au-dessus de la droite LB des points correspondant à la limite basse de la plaquette (droite de jonction entre la plaquette 13 et le fond 12), et/ou à une distance Y prédéterminée au-dessous de la droite HP de limite haute (réelle ou détectée) de la plaquette.

Les distances X1, X2, et/ou Y sont par exemple accessibles, après une identification de l'écran, via une base de données comprenant une correspondance entre l'écran identifié et les dimensions de la plaquette (connues de la base de données ou mesurées par profilométrie).

La ligne de découpe LD peut également être définie comme la médiatrice entre les limites haute HP et basse HL de la partie de la plaquette sans évidements.

Une fois la ligne de découpe LD déterminée, un outil de découpe (non illustré) peut par exemple être asservi pour découper la plaquette selon ladite ligne de découpe.

A cause de l'échantillonnage du balayage laser il est possible de ne pas obtenir d'image correspondant à l'instant précis où le laser 20 est positionné au niveau du sommet S des évidements 14 de la plaquette, zone qui devrait pourtant être considérée comme indispensable à la détermination des limites basses de la zone de découpe.

En revanche, il est possible de déterminer si l'image obtenue correspond à un balayage du laser en amont (avant) ou en aval (après) du sommet S des lampes. On peut donc prévoir de sélectionner la première image obtenue après le balayage du sommet S des lampes et déterminer que le profil de cette image contient la limite basse de la ligne de découpe. Ce qui permet de surévaluer la position de la limite basse donc de garantir que la ligne de découpe ne passera pas dans le plan des lampes.

De la même manière, on peut prévoir de sélectionner la première image obtenue avant le balayage du carter 30 et déterminer que le profil de cette image contient la limite haute de la ligne de découpe. Ce qui permet de sous-évaluer la position de la limite haute donc de garantir que la ligne de découpe ne passera pas dans le carter.

### Balayage multiple

Pour déterminer la ligne de découpe LD, il est souhaitable que le trait couvre la totalité des lampes. A cet effet, la distance entre le laser 20 et l'écran peut être adaptée.

Or cette distance influence la résolution de la caméra 21 : plus l'écran est grand, plus il faut, pour un même ensemble laser-caméra, augmenter la distance laser/écran, donc plus la caméra 21 est également éloignée de l'écran, et plus la résolution est faible. Ainsi, la précision de mesure est fonction de la taille des écrans. De plus, l'augmentation de la distance entre la zone éclairée par le laser 20 et la caméra 21 réduit la puissance lumineuse atteignant le capteur de la caméra 21 : ceci réduit encore la précision de mesure.

Si le trait laser ne couvre pas la totalité des lampes, il est donc préférable de réaliser un balayage multiple de l'écran, en gardant la distance laser/écran constante pour tous les écrans. Le nombre de balayages dépend outre cette distance, des dimensions de l'écran, de la taille du champ scruté par la caméra 21 et de l'angle d'ouverture du plan lumière du laser.

Lors de chaque balayage, on détermine une équation en 3D dans le repère du robot de la ligne de découpe grâce à un algorithme de calcul qui prend en entrée les informations géométriques (et références) de l'écran et qui génère des plans de découpe (équations 3D). Pour plusieurs balayages, on obtient plusieurs équations 3D de droite qui sont quasiment colinéaires (aux imprécisions de mesure près), soit -après régression- une seule et même équation.

On notera que si les équations obtenues pour chaque balayage sont trop différentes entre elles, le système peut alors lever une alarme. Une telle alarme peut correspondre soit à l'état de déformation de l'écran (abimé/déformé au niveau de la plaquette) donc la procédure de découpe risquerait de ne pas être adéquate, soit à une erreur de mesure. Il est alors possible d'évacuer l'écran vers d'autres moyens de découpe/désassemblage.

De préférence, on prévoit au minimum de balayer les deux extrémités ou zones latérales EL1, EL2 de la plaquette, afin de pouvoir déterminer les extrémités correspondantes du segment de droite de découpe LD.

Les images des deux extrémités latérales EL1, EL2 de la plaquette permettent également de déterminer une éventuelle ligne de découpe LDE1, LDE2 dans l'une au moins de ces extrémités ou zones latérales.

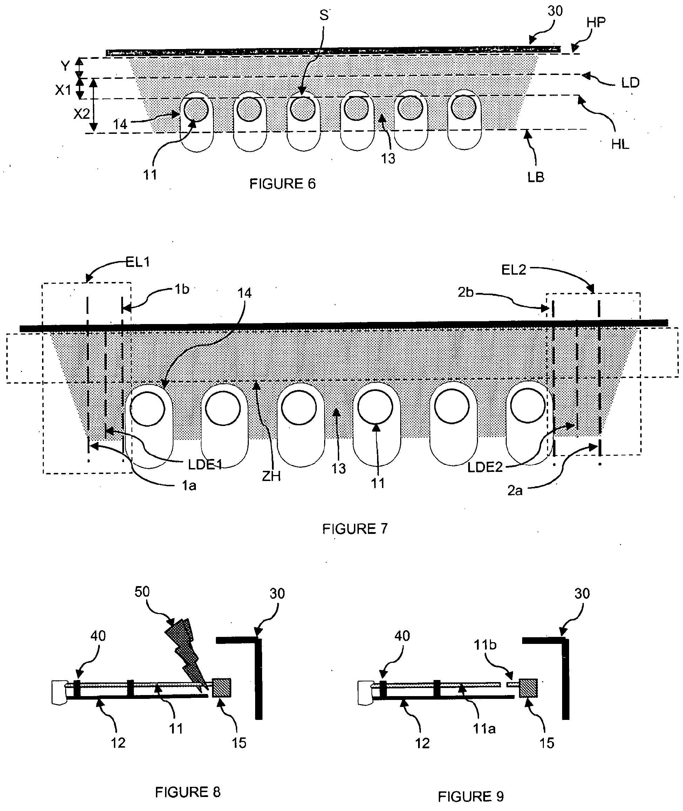

Les bords inclinés R1, R3 haut et bas de l'écran, ne comportant pas d'évidements, ils provoquent des profils verticaux dans l'image et sont donc facilement identifiables. Les lignes de découpe LDE1, LDE2 dites verticales sont des lignes médianes entre le contour externe de l'évidement ou encoche la plus externe (ligne 1b figure 7) et le point le plus intérieur du bord incliné sans encoche (ligne 1a figure 7) pour la première zone latérale EL1. Et symétriquement avec les lignes 2a, 2b pour l'autre zone latérale EL2.

Alternativement au balayage multiple, on peut prévoir une pluralité d'ensembles caméra-laser. Pour chaque ensemble le laser a une lentille d'ouverture respective permettant d'avoir un trait plus ou moins étendu et la caméra a une focale plus ou moins courte (grand ou très grand angle).

L'ensemble caméra-laser est sélectionné selon la taille de l'écran. On peut alors n'effectuer qu'un seul balayage.

Au préalable, l'ensemble de vision caméra-laser a été calibré. La calibration, connue en soi dans ce domaine, consiste à faire correspondre des points de l'image 2D avec des coordonnées réelles 3D dans un repère donné, de manière à transcrire les informations recueillies dans les images en plans de coupe dans un repère de base. On définit de préférence comme repère de base celui du robot (de découpe). Ce qui permet de pouvoir effectuer un changement de repère pour toutes les coordonnées des points correspondants aux mouvements de l'ensemble caméra-laser et les différentes équations calculées entre le repère de l'ensemble caméra-laser et ce repère de base.

### Balayage latéral

Dans un autre mode de réalisation, alternatif ou complémentaire, le balayage laser est latéral. Dans ce cas, le trait laser (rectiligne) est quasi parallèle à l'axe d'élongation des lampes, voir figures 4f, 4g, 5f et 5g.

Sur la figure 4f, le trait laser est entre deux lampes adjacentes. Il en résulte le profil correspondant à la figure 5f qui comprend :
- une ligne sensiblement droite continue PT' correspondant au support sur lequel était posé l'écran lors des mesures de profilométrie,
- une ligne sensiblement droite continue P30' correspondant au carter 30.
- une ligne sensiblement droite continue P13' correspondant à la plaquette 13, et
- une ligne sensiblement droite continue P12' correspondant au fond 12,

Sur la figure 4g, le trait laser couvre partiellement une lampe et la plaquette. Il en résulte le profil correspondant figure 5g qui comprend :
- une ligne sensiblement droite continue PT' correspondant au support sur lequel était posé l'écran lors des mesures de profilométrie,
- une ligne sensiblement droite continue P30' correspondant au carter 30,
- une ligne sensiblement droite continue P13' correspondant à la plaquette 13,
- une ligne sensiblement courbée P11' correspondant à la lampe couverte par le laser, et
- une ligne sensiblement droite P12' correspondant au fond 12.
Sur la figure 5g, on notera deux discontinuités D1 et D2, de part et d'autre de la ligne sensiblement courbée P11'. Ces discontinuités sont dues aux réflexions du trait laser sur la surface courbe de la lampe qui n'atteignent pas la caméra.

En l'espèce le trait laser est quasi parallèle à la direction de la longueur du fond de l'écran. La longueur du trait laser recouvre la plaquette 13, ce qui permet de détecter les extrémités haute HP et basse HL/LB de la plaquette à coup sûr. Par quasi parallèle, on entend que l'angle entre le trait laser et l'axe d'élongation des lampes est inférieur à 10 degrés et de préférence inférieur à 5 degrés. Dans ce cas, la direction du balayage est parallèle à la direction de la longueur du fond de l'écran. Par rapport au mode de réalisation précédent dans lequel la direction du balayage est perpendiculaire à la direction de la longueur du fond de l'écran, l'avantage est qu'un seul balayage suffit pour déterminer les extrémités latérales de la plaquette.

Quel que soit le type de balayage, il est donc possible de déterminer dans la plaquette des zones de découpe, dans lesquelles se situe la ligne de découpe, telles qu'une découpe est possible sans porter atteinte à l'intégrité des lampes.

Sur la partie supérieure de la plaquette, on peut définir une zone de découpe potentielle entre la droite reliant les points correspondant au sommet des lampes et la droite correspondant à la limite haute de la plaquette (c'est-à-dire au carter 30 de l'écran).

Sur une partie latérale de la plaquette, on peut définir une zone de découpe potentielle, dans la hauteur de la plaquette, à partir de la lampe la plus externe et le bord latéral le plus proche de celle-ci. A cet effet, on détecte la position du point du contour externe de l'évidement de cette lampe la plus externe tel que la distance entre ce point et le bord le plus proche soit minimale.

A titre alternatif, ou en combinaison, on peut prévoir un marquage 151 de la plaquette par des marqueurs optiques. Les marqueurs optiques peuvent être posés par exemple manuellement par un opérateur directement dans une zone de découpe qu'il repère visuellement.

La position des marqueurs est déterminée par des moyens de lecture optique, et la ligne de découpe relie les points correspondant à la position 3D de ces marqueurs. Ainsi deux marqueurs peuvent suffire pour déterminer une droite de découpe, ce qui permet d'avoir un procédé rapide.

### Découpe

La ligne de découpe LD, LDE1, LDE2 a été en général définie dans le repère du robot portant la caméra 21 et le laser 20. Une étape de calcul peut être nécessaire pour calculer les coordonnées de la ligne de découpe dans le repère du robot portant un outil de découpe.

L'outil de découpe permet d'effectuer une découpe dont la source d'énergie est optique ; thermique ; ou mécanique.

Pour une découpe optique, on utilise de préférence un laser, différent du laser 20 de profilométrie, et de préférence adapté à la découpe des plastiques.

Pour une découpe thermique, par exemple avec un chalumeau ou une pointe thermique, on utilise de préférence un outil dont la température d'utilisation est supérieure ou égale à la température de fusion du matériau de la plaquette, et inférieure à la température de fusion du verre des lampes. Par pointe thermique on entend un dispositif dont une extrémité métallique par exemple en forme de pointe, de fil ou de lame peut être chauffée à une température déterminée.

Pour une découpe mécanique, par exemple à l'aide d'un outil abrasif (tel qu'une meuleuse ou une fraise), une scie (notamment une scie circulaire), ou encore un jet d'eau. Du fait de la diversité des matériaux constituant les écrans, les outils abrasifs ou les scies (c'est-à-dire les outils avec un contact direct) peuvent avoir une durée de vie relativement limitée. On préfère donc utiliser un outil de type Scie HSSE revêtue, ou une Fraise carbure.

La découpe est effectuée selon au moins un mouvement de translation suivant la trajectoire définie par la ligne de découpe LD, LDE1, LDE2. Si la ligne de découpe comprend plusieurs segments de droite sécants, la découpe peut commencer par l'un quelconque des segments. La découpe est au moins partielle, c'est-à-dire qu'elle peut être effectuée de manière continue et/ou discontinue, de type pointillés.

La profondeur de découpe est typiquement de l'ordre de quelques millimètres (typiquement 2 à 5 mm), de sorte à perforer la plaquette dans toute son épaisseur.

L'outil de découpe est orienté par rapport à la plaquette selon un angle éventuellement modifiable. La profondeur de découpe peut être asservie à l'orientation de l'outil de découpe par rapport à la plaquette.

La découpe peut également s'effectuer manuellement, avec un outil de type Dremel (Marque déposée).

### Retrait de la plaquette

La plaquette peut être, de fait, au moins partiellement retirée par la fonte de celle-ci. La plaquette peut être suffisamment fondue pour libérer un espace autour des connecteurs apte à permettre la désolidarisation des lampes et du fond de l'écran.

Hormis cette découpe thermique particulière, après la découpe, la plaquette reste généralement dans l'écran, par exemple parce que la découpe est discontinue ou parce que les évidements 14 de la plaquette exercent un frottement sur les lampes.

Dans le cas d'une découpe continue, on peut retirer la plaquette par exemple manuellement, éventuellement à l'aide d'un outil tel qu'une pince ou un outil de levier (tournevis ou autre).

Dans le cas d'une découpe discontinue, on peut retirer la plaquette par exemple manuellement soit en arrachant la partie prédécoupée de la plaquette, soit en pliant la plaquette sur cette ligne de découpe discontinue.

Après retrait de la plaquette, les connecteurs sont accessibles.

### Retrait des lampes

Une fois les connecteurs accessibles, les lampes sont désolidarisées du fond de l'écran au moins partiellement manuellement.

Les lampes peuvent être déconnectées manuellement des connecteurs.

Les connecteurs peuvent être désolidarisés du fond de l'écran, par exemple en les désoudant. Les lampes peuvent être déconnectées des connecteurs ultérieurement.

Pour éviter que les lampes ne cassent sous leur propre poids et optimiser la réflexion de la lumière sur le fond, les lampes sont généralement maintenues à distance du fond par des oeillets ou des clips.

Les oeillets (non illustrés) sont des pièces en forme de disque dont le diamètre intérieur épouse le diamètre extérieur des lampes, et dont le diamètre extérieur est adapté à la hauteur des connecteurs par rapport au fond.

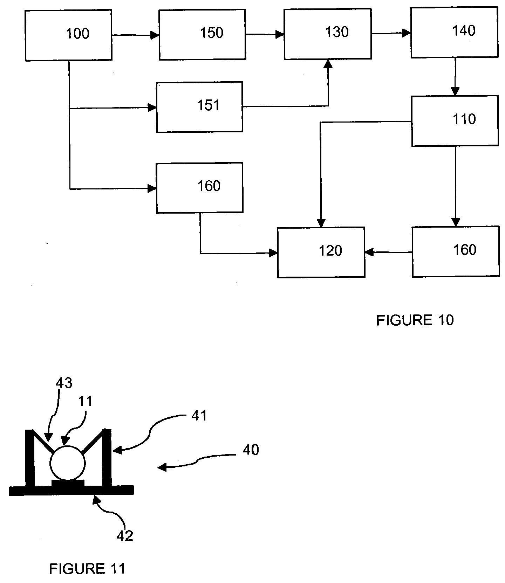

Les clips 40 (figure 11) sont des pièces, en général en plastique, comprenant un support 42 et deux chevalets 43, chaque chevalet étant monté sur un picot respectif 41, entre lesquels une lampe 11 peut être maintenue.

On peut prévoir de désolidariser les lampes des clips, par exemple en découpant ou en cassant les chevalets. Cette opération peut être mise en oeuvre manuellement, à l'aide d'outil tel qu'un marteau / burin ou tournevis, cutter, Dremel (Marque déposée), etc. Cette opération peut aussi être mise en oeuvre par un robot. A cet effet, il est souhaitable, lors de l'étape de profilométrie laser décrite précédemment, d'effectuer un balayage laser sur toute la surface de l'écran afin de déterminer au moins l'emplacement, et si possible la forme des picots et des chevalets, pour déterminer le plan de coupe des picots/chevalets.

On peut aussi prévoir de désolidariser d'abord les lampes du fond de l'écran en conservant les clips solidaires des lampes, puis dans une étape ultérieure de désolidariser les lampes et les clips. Ceci permet de maintenir les lampes et d'éviter leur casse par les vibrations dues à la découpe des plaquettes.

### Pincement thermique

On peut également prévoir une étape 160 de pincement thermique du verre d'au moins une lampe, en amont de sa désolidarisation du fond de l'écran.

Le pincement thermique consiste à chauffer une pince 50 (figure 8) à haute température, c'est-à-dire une température suffisante pour faire fondre le verre dont les tubes des lampes sont constitués, et à appliquer la pince sur les lampes.

La pince est positionnée par un robot ou un opérateur de préférence le plus près possible des connecteurs.

L'actionnement de la pince fait fondre le verre, ce qui sépare la lampe en deux morceaux 11a, 11b (figure 9). La fonte du verre sur lui-même referme également, de manière étanche, le tube de chaque côté de la pince thermique, ce qui limite la diffusion de mercure et permet de désolidariser 120 les lampes 11 de l'écran 10 sans les casser.

Pour cette opération, il est préférable de conserver les oeillets ou de maintenir les lampes dans leurs clips 40 afin de stabiliser les lampes et de les maintenir en position une fois découpées. Sinon les morceaux découpés 11a pourraient se casser en tombant sur le fond de l'écran. Ce qui facilite également la manipulation de la pince thermique.

Un (petit) morceau de lampe 11b reste généralement dans le connecteur. L'opérateur peut ensuite enlever manuellement ce morceau, rendu moins fragile par la diminution du bras de levier, et sans risquer de casser toute la lampe.

Le pincement thermique peut être effectué en complément des étapes décrites précédemment, par exemple lorsqu'une lampe est coincée dans son connecteur et que le connecteur reste solidaire du fond de l'écran.

Le pincement thermique peut être effectué en alternative au retrait au moins partiel de la plaquette. Dans ce cas, il doit être appliqué à toutes les lampes.

## Revendications

1. Procédé de déconstruction au moins partielle d'un écran plat, l'écran (10) comprenant
des connecteurs (15) solidaires de l'écran (10),
des lampes (11) de rétro-éclairage connectées à au moins un connecteur (15) respectif, et solidaires de l'écran (10) par ce connecteur (15),
au moins deux bords latéraux (R1, R3),
au moins une plaquette (13), recouvrant des connecteurs (15) et l'extrémité des lampes (11) connectées à ceux-ci, et étant munie d'évidements (14) pour le passage desdites lampes (11) vers ces connecteurs (15),
**caractérisé en ce que** le procédé comprend des étapes consistant à :
- lorsque l'écran (10) comprend une dalle, retirer au préalable (100) ladite dalle pour rendre les lampes (11) et la plaquette (13) apparentes, - une étape de profilométrie laser (150) consistant à obtenir la topographie tridimensionnelle au moins des lampes (11) et de la plaquette (13), pour en déduire une ligne de découpe (LD, LDE1, LDE2) de la plaquette (13).
- déterminer (130) au moins une ligne de découpe (LD, LDE1, LDE2) de la plaquette (13),
- découper (140) au moins partiellement la plaquette (13) selon ladite ligne de découpe (LD, LDE1, LDE2)
déterminée, et - désolidariser (120) les lampes (11) de l'écran (10) sans les casser,

2. Procédé selon la revendication 1, comprenant en outre une étape consistant à :
retirer (110) au moins partiellement la plaquette pour donner accès aux connecteurs (15).

3. Procédé selon l'une quelconque des revendications précédentes, dans lequel la ligne de découpe (LD) de la plaquette (13) est comprise dans une zone (ZH) comprise dans l'espace situé entre le sommet (S) des lampes et le haut (HP) de la plaquette (13) ou le carter (30) de l'écran.

4. Procédé selon l'une quelconque des revendications précédentes, dans lequel la ligne de découpe (LDE1, LDE2) de la plaquette est comprise dans au moins une zone latérale (EL1, EL2) de la plaquette (13).

5. Procédé selon l'une quelconque des revendications précédentes, dans lequel l'étape (140) de découpe au moins partielle de la plaquette (13) comprend une découpe dont la source d'énergie est optique ; thermique ; ou mécanique.

6. Procédé selon l'une quelconque des revendications précédentes, dans lequel l'étape (150) de profilométrie laser comprend un balayage laser longitudinal et/ou latéral, éventuellement multiple de l'écran (10).

7. Procédé selon l'une quelconque des revendications précédentes, dans lequel l'étape (130) consistant à déterminer au moins une ligne de découpe (LD, LDE1, LDE2) de la plaquette (13) comprend une étape de marquage (151) de la plaquette par des marqueurs, et une étape de détermination de la position des marqueurs pour établir ladite ligne de découpe.

8. Procédé selon l'une quelconque des revendications précédentes, comprenant en outre une étape (160) de pincement thermique du verre d'au moins une lampe.

## Patentansprüche

1. Verfahren zur wenigstens teilweisen Zerlegung eines Flachbildschirms, wobei der Bildschirm (10) aufweist:
Verbinder (15), die mit dem Bildschirm (10) fest verbunden sind,
Hintergrundbeleuchtungslampen (11), die mit wenigstens einem jeweiligen Verbinder (15) verbunden sind und durch diesen Verbinder (15) mit dem Bildschirm (10) fest verbunden sind,
wenigstens zwei Seitenleisten (R1, R3),
wenigstens eine kleine Platte (13), welche Verbinder (15) und das Ende der mit diesen verbundenen Lampen (11) abdeckt und mit Aussparungen (14) für die Hindurchführung der Lampen (11) zu diesen Verbindern (15) ausgestattet ist,
**dadurch gekennzeichnet, dass** das Verfahren Schritte aufweist, die in Folgendem bestehen:
- wenn der Bildschirm (10) eine Bildschirmplatte aufweist, Ausbauen (100) dieser Bildschirmplatte im Voraus, so dass die Lampen (11) und die kleine Platte (13) sichtbar werden,
- in einem Schritt der Laserprofilometrie (150), der darin besteht, die dreidimensionale Topographie wenigstens der Lampen (11) und der kleinen Platte (13) zu erhalten, um daraus eine Schneidlinie (LD, LDE1, LDE2) der kleinen Platte (13) abzuleiten,
- Bestimmen (130) wenigstens einer Schneidlinie (LD, LDE1, LDE2) der kleinen Platte (13),
- wenigstens teilweises Zerschneiden (140) der kleinen Platte (13) entlang der bestimmten Schneidlinie (LD, LDE1, LDE2), und
- Lösen (120) der Lampen (11) von dem Bildschirm (10), ohne sie zu zerbrechen.

2. Verfahren nach Anspruch 1, welches außerdem einen Schritt aufweist, der in Folgendem besteht:
wenigstens teilweises Entfernen (110) der kleinen Platte, um einen Zugang zu den Verbindern (15) zu verschaffen.

3. Verfahren nach einem der vorhergehenden Ansprüche, wobei die Schneidlinie (LD) der kleinen Platte (13) in einem Bereich (ZH) verläuft, der in dem Zwischenraum zwischen dem Scheitelpunkt (S) der Lampen und dem oberen Rand (HP) der kleinen Platte (13) oder dem Gehäuse (30) des Bildschirms enthalten ist.

4. Verfahren nach einem der vorhergehenden Ansprüche, wobei die Schneidlinie (LDE1, LDE2) der kleinen Platte in wenigstens einem seitlichen Bereich (EL1, EL2) der kleinen Platte (13) verläuft.

5. Verfahren nach einem der vorhergehenden Ansprüche, wobei der Schritt (140) des wenigstens teilweisen Zerschneidens der kleinen Platte (13) einen Schneidvorgang beinhaltet, dessen Energiequelle optischer, thermischer oder mechanischer Art ist.

6. Verfahren nach einem der vorhergehenden Ansprüche, wobei der Schritt (150) der Laserprofilometrie eine möglicherweise mehrmalige Laserabtastung des Bildschirms (10) in Längs- und/oder Querrichtung beinhaltet.

7. Verfahren nach einem der vorhergehenden Ansprüche, wobei der Schritt (130), der darin besteht, wenigstens eine Schneidlinie (LD, LDE1, LDE2) der kleinen Platte (13) zu bestimmen, einen Schritt des Markierens (151) der kleinen Platte mit Markierungen und einen Schritt der Bestimmung der Position der Markierungen, um die Schneidlinie festzulegen, beinhaltet.

8. Verfahren nach einem der vorhergehenden Ansprüche, welches außerdem einen Schritt (160) der thermischen Einschnürung des Glases wenigstens einer Lampe aufweist.

## Claims

1. Method for at least partially deconstructing a flat screen, the screen (10) comprising
connectors (15) interdependent of the screen (10),
back-light lamps (11) connected to at least one respective connector (15), and interdependent of the screen (10) by this connector (15),
at least two lateral edges (R1, R3),
at least one plate (13), covering the connectors (15) and the end of the lamps (11) connected thereto, and being provided with cavities (14) for the passage of said lamps (11) to these connectors (15),
**characterized in that** the method comprises steps consisting in:
- when the screen (10) comprises a flagstone, first removing (100) said flagstone to reveal lamps (11) and the plate (13),
- a step of laser profilometry (150) consisting in obtaining the three-dimensional topography at least of the lamps (11) and of the plate (13), to deduce therefrom a cutting line (LD, LDE1, LDE2) of the plate (13),
- determining (130) at least one cutting line (LD, LDE1, LDE2) of the plate (13),
- cutting (140) at least partially the plate (13) along said determined cutting line (LD, LDE1, LDE2), and
- separating (120) the lamps (11) from the screen (10) without breaking them.

2. Method according to Claim 1, further comprising a step consisting in:
removing (110) at least partially the plate to give access to the connectors (15).

3. Method according to either one of the preceding claims, in which the cutting line (LD) of the plate (13) lies in a zone (ZH) contained in the space located between the summit (S) of the lamps and the top (HP) of the plate (13) or the case (30) of the screen.

4. Method according to any one of the preceding claims, in which the cutting line (LDE1, LDE2) of the plate lies in at least one lateral zone (EL1, EL2) of the plate (13).

5. Method according to any one of the preceding claims, in which the step (140) of the cutting of at least partially the plate (13) comprises a cutting whose source of energy is optical; thermal; or mechanical.

6. Method according to any one of the preceding claims, in which the step (150) of the laser profilometry comprises a longitudinal and/or lateral laser scan, possibly multiple such scans, of the screen (10).

7. Method according to any one of the preceding claims, in which the step (130) consisting in determining at least one cutting line (LD, LDE1, LDE2) of the plate (13) comprises a step of marking (151) of the plate by markers and a step of determining the position of the markers to establish said cutting line.

8. Method according to any one of the preceding claims, further comprising a step (160) of thermal pinching of the glass of at least one lamp.
